# EUROPÄISCHE PATENTSCHRIFT

(11) **EP 2 227 975 B1**
(45) Veröffentlichungstag und Bekanntmachung des Hinweises auf die Patenterteilung: **04.12.2013**
(21) Anmeldenummer: 10156148.8
(22) Anmeldetag: 11.03.2010
(51) Int. Cl.: A43B 17/14, A43B 13/12, A43B 17/00, A62D 5/00, D06N 3/14, A62B 17/00

(54) **Schuheinlegesohle**
Shoe insole
Semelle de chaussure

(30) Priorität: 14.03.2009 DE 202009003632 U
(43) Veröffentlichungstag der Anmeldung: 15.09.2010
(73) Patentinhaber: Nanogate AG, 66287 Quierschied-Göttelborn (DE)
(72) Erfinder: Zytur, Holger, 97456, Dittelbrunn (DE); Bendjaballah, Salah, 66119, Saarbrücken (DE)
(74) Vertreter: von Kreisler Selting Werner

(56) Entgegenhaltungen:
- EP-A1- 1 522 229
- EP-A2- 0 272 690
- EP-A2- 0 900 531
- EP-A2- 1 472 945
- WO-A1-02/43519
- WO-A1-97/44183
- DE-A1- 4 419 803
- ES-U- 1 062 174

## Beschreibung

Die vorliegende Erfindung betrifft eine Schuheinlegesohle mit einer wärmeisolierenden, atmungsaktiven und antimikrobiell ausgerüsteten Zwischenschicht.

EP 0566740 B1/DE 69231851 T2 beschäftigt sich mit der Verwendung eines bioziden Selbstklebemittels, das ein Klebemittel umfasst, das wirksam darin gehaltenes Isothiocyanat enthält, um bakteriostatische, bakterizide und antimikrobielle Eigenschaften und ähnliches aufzuweisen, und ein Verfahren zur Herstellung desselben als auch einen selbstklebenden Gegenstand, der durch wirksames Aufbringen eines solchen Selbstklebemittels auf einen Träger hergestellt ist. Insbesondere betrifft diese Schrift die Verwendung eines solchen bioziden Selbstklebemittels, welches für die Verwendungen, die zum Zweck des Bereitstellens von bakteriziden, fungiziden und mikrobiellen Wirkungen in Gebäuden und Nahrungsmitteln bezogenen Gebieten breit beabsichtigt sind, genommen werden. Diese Schrift betrifft auch ein allmählich Isothiocyanat abgebendes Blatt als eine Anwendung eines selbstklebenden Gegenstandes der oben beschriebenen Art, der durch wirksames Halten eines Isothiocyanats auf einem Träger wie beispielsweise Papier, einem ungewobenen Gewebe oder ähnlichem durch ein Klebemittel oder ein geringflüchtiges, öliges Flüssigkeitsmedium hergestellt ist, so dass das Blatt antibakterielle, bakterizide und antimikrobielle Eigenschaften und ähnliches aufweist, und insbesondere ein solches Isothiocyanat allmählich freisetzendes Blatt, welches für die Verwendungen, die für den Zweck des Bereitstellens von bakteriziden, fungiziden und mikrobiziden Wirkungen auf verschiedenen Gebieten wie beispielsweise Gebäuden, den auf Nahrungsmittel bezogenen Gebieten und Schuheinlegesohlen breit vorgesehen sind. Da hier die Menge an abzugebendem Isothiocyanat begrenzt ist, kann eine antimikrobielle Wirkung nur über einen begrenzten Zeitraum gewährleistet werden.

EP 0581810 B1/DE 69223953 T2 beschäftigt sich mit Fasern oder Filamenten und insbesondere Fasern oder Filamenten aus wasserabsorbierendem wasserunlöslichem Material. Diese Materialien eignen sich zur Verwendung in vielen saugfähigen Produkten, insbesondere in Produkten zur Absorption von wässrigen Körperflüssigkeiten, wie zum Beispiel: Kinderwindeln, Inkontinenzeinlagen, Damenbinden und Tampons, sowie in Materialien zum Aufwischen verschütteter wässriger Flüssigkeiten. Die meisten wasserabsorbierenden wasserunlöslichen Materialien sind nur in Pulverform erhältlich. Ein saugfähiges Pulver ist jedoch im saugfähigen Produkt, beispielsweise in Windeln, nicht problemlos in der gewünschten Position zu halten. Fasern und Filamente lassen sich besser in Position halten, indem man sie in ein textiles Flächengebilde einbindet. Solche Fasern würden sich auch als Einlage in einer Schuhsohle eigenen, um eventuell entstehenden Fußschweiß zu adsorbieren. Eine antimikrobielle Wirkung sowie Atmungsaktivität kann hierdurch jedoch nicht geleistet werden.

DE 202008009947 U1 beschäftigt sich mit Schuheinlegesohlen aus einer elastischen Tragschicht, auf der eine Zwischenschicht und eine faserbasierte Oberschicht sind. Die hier beschriebene Einlegesohle hat eine elastische Tragschicht, auf der eine vorzugsweise faserbasierte Zwischenschicht und eine faserbasierte Oberschicht sind. Die Zwischenschicht enthält eine Komponente, die bei einer Temperatur T₁ mit 10°C<T₁<42°C, bevorzugt 15°C<T₂<40°C, einen Phasenübergang erster Ordnung hat. Zusätzlich enthält die Oberschicht Bestandteile zerkleinerter Algen, die beim Spinnen in eine Faser der Oberschicht eingebracht wurden. Die Zwischenschicht und/oder die Oberschicht sind zudem bakteriostatisch.

EP 1 522 229 A1 **offenbart einen Schuh, insbesondere einen Stiefel, mit Schutzfunktion gegenüber chemischen Giften, mit mehrschichtigem Schichtaufbau, welcher eine im Tragezustand vom Fuß abgewandte Außenschicht und eine der Außenschicht zugeordnete, im Tragezustand dem Fuß zugewandte Innenschicht aufweist, wobei zwischen Außenschicht und Innenschicht eine Adsorptionsschicht auf Basis eines chemische Gifte absorbierenden Adsorptionsmaterials angeordnet ist.**

Der hier beschriebenen Erfindung liegt die Aufgabe zugrunde, die Qualität einer Schuheinlegsohle dahingehend zu verbessern, dass bei gleichem Tragekomfort eine Atmungsaktivität sichergestellt wird und weiterhin auch eine bakterizide und/oder fungizide Ausrüstung vorhanden ist, die jedoch zu keiner Zeit direkt mit der Fußsohle in Kontakt kommt.

Dieses Problem **wird** durch eine **erfindungsgemäße** Schuheinlegsohle mit einer Trägerschicht, einer wärmeisolierenden, atmungsaktiven und bakterizid und/oder fungizid ausgerüsteten Zwischenschicht und einer Oberschicht, **wie in Patentanspruch 1 beschrieben,** gelöst.

Die in dieser Erfindung beschriebene Zwischenschicht besteht aus einer Folie oder Membran geringer Dicke, die Polyester, Polyurethane oder Polyethersulfone enthält. Die Dicke der Folie beträgt vorzugsweise 15µm, sie kann jedoch eine Dicke von 5 bis 50µm aufweisen. Wenn die Zwischenschicht zu dick ist, kann diese keine Atmungsaktivität gewährleisten. Bei einer zu geringen Dicke ist die Stabilität des Sohlenaufbaus nicht gewährleistet. Die Atmungsaktivität ist hier insbesondere nicht durch eine Porosität der Folien bedingt, sondern basiert auf Diffusionsvorgängen. Die Hydrophilie der Folien führt zu einer Auflösung des Wassermoleküls in der Folienmatrix. Anschließend führen Diffusionsvorgänge dazu, dass die gelösten Moleküle auf die andere Seite der Folie transportiert werden und von dort wieder abdampfen.

Solche Folien können insbesondere mit Hilfe von Silber- und/oder Zinkverbindungen, beispielsweise Zinkpyrithion antimikrobiell ausgerüstet werden, da eine antimikrobielle Wirkung sowohl von Zink als auch von Silber hinreichend bekannt ist. Diese Ausrüstung wird insbesondere durch die Zugabe biozid wirkender Stoffe bei der Folienproduktion erzielt.

Eine Erfindungsgemäße antimikrobielle Schuheinlegesohle kann insbesondere im medizinischen Bereich Verwendung finden, im Einsatz gegen Krankheiten oder Beschwerden der Füße, die durch Bakterien oder Pilze verursacht werden, wie zum Beispiel Fußpilz, Nagelpilz oder Hautekzeme.

Da in der in dieser Erfindung beschriebenen Schuheinlegesohle die Zwischenschicht Silber und/oder Zink enthält, wird ein direkter Kontakt mit der Haut vermieden, die antimikrobielle Wirkung bleibt jedoch erhalten. Die mit der Fußsohle in Kontakt kommende Oberschicht ist dabei im Wesentlichen frei von antimikrobiellen Wirkstoffen.

Die Atmungsaktivität der hier beschriebenen Erfindung kann gegen die Ansammlung von Fußschweiß wirken, wodurch auch die Gefahr einer bakteriellen und fungalen Infektion im Bereich der Füße und somit die Entstehung von Fußgeruch verringert werden kann.

Die Oberschicht wird vorzugsweise aus natürlichen oder synthestischen Fasern sowie deren Mischungen hergestellt und kann eine hydrophile Ausrüstung enthalten.

Die Atmungsaktivität der Erfindung wurde mit zwei voneinander unabhängigen Werten bestimmt:
MVTR-Wert (nach UNI 4818/26):
Der MVTR-Wert (Moisture Vapor Transmission Rate), also der Wasserdampfdurchgangswert, gibt an, wie viel Wasserdampf innerhalb von 24 Stunden durch einen Quadratmeter Material entweichen kann (g/m²/24 h). Dabei wird das Wasser in der Regel auf die normale Körpertemperatur (36 bis 38 °C) erhitzt und verdunstet. Das entwichene Wasser wird aufgefangen und in Gramm gemessen. Je höher der Wert, beziehungsweise die Angabe der Grammzahl, desto atmungsaktiver ist das Material. Ab einem Wert von 10.000 g/m²/24 h gilt ein Material als sehr atmungsaktiv. Das bedeutet, dass theoretisch innerhalb eines Tages 10 Liter Wasser durch ein 1m² großes Materialstück entweichen können.

RET-Wert (nach EN ISO 31092):
Der RET-Wert (Resistance Evaporation Transmission) bezeichnet den Wasserdampfdurchgangswiderstand eines Materials. Untersucht wird hierfür der Widerstand, der dem Wasserdampf beim Durchtritt durch ein Material vom Körper weg nach außen entgegengesetzt wird. Je kleiner der RET-Wert, desto geringer der Widerstand und desto atmungsaktiver das Produkt. Man unterscheidet folgende Kategorien der Atmungsaktivität:

| | | |
|---|---|---|
| RET-Wert | unter 6 | extrem atmungsaktiv |
| RET-Wert | 6 bis 13 | sehr atmungsaktiv |
| RET-Wert | 13 bis 20 | atmungsaktiv |
| RET-Wert | unter 20 | nicht atmungsaktiv |

Erfindungsgemäß weist die Zwischenschicht bei einer Dicke von 15 µm einen MVTR-Wert im Bereich von 500 g/m² pro 24 h bis 5000 g/m² pro 24 h, bevorzugt 800 g/m² pro 24 h bis 1400 g/m² pro 24 h auf.

Erfindungsgemäß weist die Zwischenschicht bei einer Dicke von 15 µm einen RET-Wert im Bereich von 0,2 bis 20 m²Pa/W., insbesondere 0,8 bis 13 m²Pa/W auf.

### Ausführungsbeispiel:

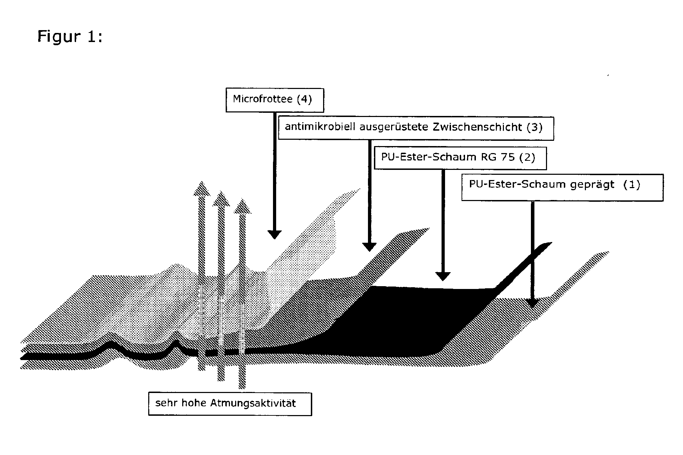

Eine erfindungsgemäße Schuheinlegesohle wurde mit Hilfe eines handelsüblichen Polyurethan-Ester-Produktes mit mikrobiologisch aktiver Zwischenschicht (gemäß Fig. 1) realisiert.

Die Sohle bestand aus insgesamt 4 Schichten. Ein geprägter Polyurethan-Ester-Schaum (1) mit einer Stärke von 0,8 mm bildete die Trägerschicht. Darauf befand sich eine 2,0 mm ± 0,2 mm starke Schicht eines Polyurethan-Ester-Schaums RG 75 (2). Ein Zinkpyrithiongehalt von ≤2 Gew-% stellte die antimikrobielle Wirkung der 15µm dicken Zwischenschicht (3) sicher. Die Oberschicht (4) bestand aus Mikrofrottee (180 g / m² ± 10 %). Dieser besitzt spezielle Kapillareffekte, wodurch ein verbesserter Feuchtetransport zusätzlich gewährleistet wird.

Die Gesamtdicke der Schuheinlegesohle betrug 3,5 mm ± 0,5 mm.

## Patentansprüche

1. Schuheinlegesohle enthaltend eine Trägerschicht **(1,2),**
eine wärmeisolierende, atmungsaktive, antimikrobiell ausgerüstete Zwischenschicht **(3),** mit einem RET-Wert von 0,2 bis 20m²Pa/W, welche eine Dicke im Bereich von 5 bis 50 µm aufweist,
und eine hydrophile Oberschicht **(4),**
**dadurch gekennzeichnet, dass**
**die Zwischenschicht (3) einen MVTR-Wert von 500 bis 5000 g/m²/24 h aufweist und die Oberschicht (4) keine bakterizide und/oder fungizide Ausrüstung enthält.**

2. Schuheinlegesohle nach Anspruch 1, **dadurch gekennzeichnet, dass** die Zwischenschicht **(3)** eine Folie oder Membran aus Polyester oder Polyurethan enthält.

3. Schuheinlegesohle nach Anspruch 1 oder 2, **dadurch gekennzeichnet, dass** die Dicke der Zwischenschicht **(3)** 15 µm beträgt.

4. Schuheinlegesohle nach einem der Ansprüche 1 bis 3, **dadurch gekennzeichnet, dass** die Zwischenschicht **(3)** mit Silber- und/oder Zinkverbindungen antimikrobiell ausgerüstet ist.

## Claims

1. A shoe lift containing
a support layer (1, 2);
a heat-insulating, breathable, antimicrobially finished intermediate layer (3) having an RET value of from 0.2 to 20 m²Pa/W, which has a thickness within a range of from 5 to 50 µm;
and a hydrophilic top layer (4);
**characterized in that**
said intermediate layer (3) has an MVTR value of from 500 to 5000 g/m²/24 h, and said top layer (4) does not contain any bactericidal and/or fungicidal finish.

2. The shoe lift according to claim 1, **characterized in that** said intermediate layer (3) contains a sheet or membrane of polyester or polyurethane.

3. The shoe lift according to claim 1 or 2, **characterized in that** the thickness of said intermediate layer (3) is 15 µm.

4. The shoe lift according to any of claims 1 to 3, **characterized in that** said intermediate layer (3) is antimicrobially finished with silver and/or zinc compounds.

## Revendications

1. Support plantaire contenant
une couche de support (1, 2) ;
une couche intermédiaire (3) respirante, à isolation thermique, à finissage antimicrobien, ayant une valeur RET de 0,2 à 20 m²Pa/W, qui possède une épaisseur comprise entre 5 et 50 µm ;
une couche supérieure hydrophile (4) ;
**caractérisé en ce que**
ladite couche intermédiaire (3) a une valeur MVTR de 500 à 5000 g/m²/24 h, et ladite couche supérieure (4) ne contient pas de finissage bactéricide et/ou fongicide.

2. Support plantaire selon la revendication 1, **caractérisé en ce que** ladite couche intermédiaire (3) contient une feuille ou membrane en polyester ou polyuréthane.

3. Support plantaire selon la revendication 1 ou 2, **caractérisé en ce que** l'épaisseur de ladite couche intermédiaire (3) est 15 µm.

4. Support plantaire selon l'une quelconque des revendications 1 à 3, **caractérisé en ce que** ladite couche intermédiaire (3) possède un finissage antimicrobien aux composés d'argent et/ou de zinc.
